Europäisches Patentamt

European Patent Office

Office européen des brevets

(11) Publication number: **0 221 666**
**A2**

# (12) EUROPEAN PATENT APPLICATION

(21) Application number: 86307452.2

(22) Date of filing: 29.09.86

(51) Int. Cl.⁴: **G06F 3/153**

(30) Priority: 01.10.85 JP 218231/85

(43) Date of publication of application:
**13.05.87 Bulletin 87/20**

(84) Designated Contracting States:
**DE FR GB**

(71) Applicant: **SEIKO INSTRUMENTS &
ELECTRONICS LTD.
31-1, Kameido 6-chome
Koto-ku Tokyo 136(JP)**

(72) Inventor: **Yamaguchi, Kaneo Seiko Instrument
&
Electronics Ltd§31-1, Kameido, 6-chome
Koto-ku Tokyo(JP)**
Inventor: **Tanaka, Fumihiro Seiko Instrument
&
Electronics Ltd§31-1, Kameido, 6-chome
Koto-ku Tokyo(JP)**
Inventor: **Shimada, Yoshio Seiko Instrument &
Electronics Ltd§31-1, Kameido, 6-chome
Koto-ku Tokyo(JP)**
Inventor: **Matsushima, Kenichi Seiko
Instrument &
Electronics Ltd§31-1, Kameido, 6-chome
Koto-ku Tokyo(JP)**
Inventor: **Watanabe, Shinya Seiko Instrument
&
Electronics Ltd§31-1, Kameido, 6-chome
Koto-ku Tokyo(JP)**

(74) Representative: **Miller, Joseph et al
J. MILLER & CO. Lincoln House 296-302 High
Holborn
London WC1V 7JH(GB)**

(54) Improvements in or relating to hard copy and signal storage systems.

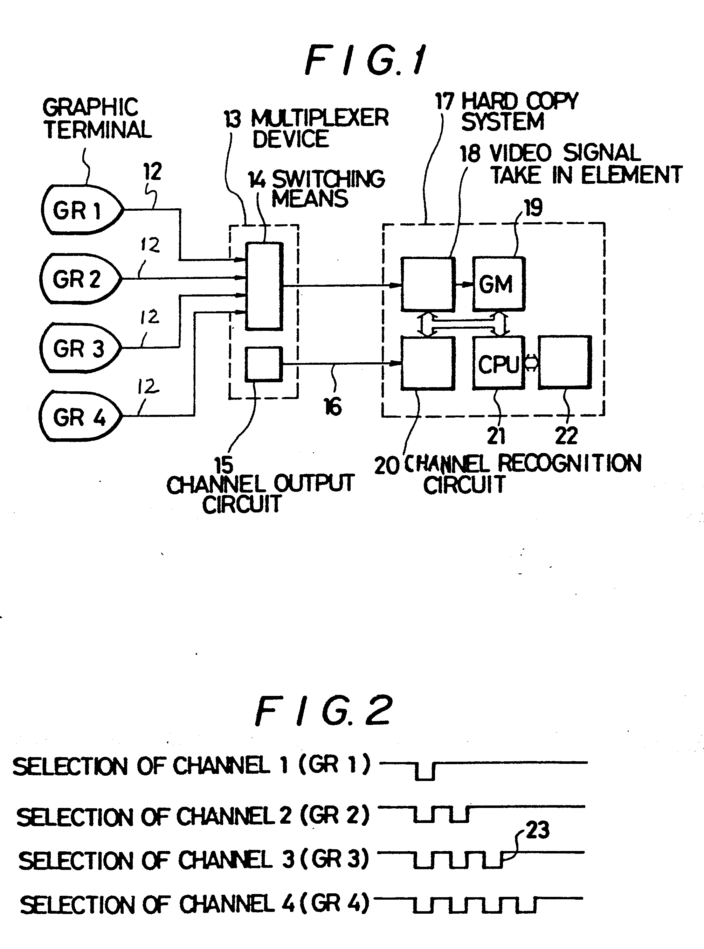

(57) A signal storage system in which a plurality of selectable graphic terminals (GR1...GR4) are connectable through a multiplexer device (13) to signal utilisation means (17) is characterised in that the multiplexer device (13) includes channel switching means (14) and a channel discrimination signal output circuit (15), and the signal utilisation means (17) include a channel discrimination recognition circuit (20), fed from the signal output circuit (15), a signal take-in element (18) fed from the switching means (14), a signal storage circuit (19) supplied with signals from the element (18), a memory (22) in which regulation and specification values appropriate to said graphic terminals (GR1 to GR4) are stored and a central processing unit (CPU) providing correct regulation by controlling the element (18) in accordance with information stored in the memory (22), whereby the need for regulation in the multiplexer device (13) is avoided, enabling said device to be of simple and inexpensive construction. Figure 1 shows four graphic terminals GR1 to GR4 feeding into a multiplexer (13) which comprises channel switching

means (14) and a channel output circuit (15). A hard copy system in the block (17) has a video signal take-in element connected to the switching means - (14), a channel recognition circuit connected to the output circuit (15), a picture signal store (19), a RAM (22) and a CPU (21) in control operative association with the element (18), signal storage circuit (19), channel discrimination recognition circuit (20) and memory (22).

## F I G. 1

GRAPHIC
TERMINAL

13 MULTIPLEXER
DEVICE

17 HARD COPY
SYSTEM

18 VIDEO SIGNAL
TAKE IN ELEMENT

12

14 SWITCHING
MEANS

19

GR 1

12

GR 2

GM

12

GR 3

12

CPU

GR 4

16

15
CHANNEL OUTPUT
CIRCUIT

20 CHANNEL RECOGNITION
CIRCUIT

21    22

## "IMPROVEMENTS IN OR RELATING TO HARD COPY AND SIGNAL STORAGE SYSTEMS"

This invention relates to hard copy and signal storage systems and is primarily concerned with so regulating the non-uniformity of video and other signals from a plurality of graphic terminals providing RGB (red, green and blue) video or like signals so as to obtain correct hard copies and/or correct stored signals when signals from these terminals are switched by a multiplexer device whose output is used to make the required copies and/or is otherwise stored. The principal object of the invention is to enable the multiplexer device used in the system to be one which does not have to include means of regulation and therefore to be of simple construction and low cost. As will be seen later this object is achieved by making the multiplexer device have channel discrimination signals and by providing means, based on said channel discrimination signals, for controlling a signal take-in element.

When RGB video signals are taken in, it is often found that they have differences in amplitude and phase generally, even when they are to the same specification. If no regulation of amplitude and phase is applied, data take-in errors occur and these produce incorrect hard copies or stored signals when the unregulated signals are used to make hard copies or are stored. Accordingly, when a plurality of graphic terminals are connected with the same hard copy system (for example)-,regulation circuits are provided for regulation of the signals supplied from the plurality of graphic terminals in the system.

In previously known systems in which signals from a number of graphic terminals are fed in to a multiplexer device, the said multiplexer device has had to be one providing regulation in a plurality of channels and this involves that the said device must be of complicated circuit construction and therefore expensive. A further disadvantage of the said previously known systems is that the multiplexer device cannot be connected to graphic terminals of different kinds and which are different in specification e.g. if one or more is of video frequency and another is of a horizontal frequency.

The present invention seeks to avoid the above disadvantages and to provide a hard copy or signal storage system in which a multiplexer device connected to a plurality of graphic terminals -even if these are of different kinds -can be of simple and inexpensive construction, for example composed mainly of switching means using relays or the like because it is not required to effect signal amplitude or phase regulation in the different channels.

According to this invention, a signal storage system in which a plurality of selectable graphic terminals are connectable through a multiplexer device to signal utilisation means is characterised in that the multiplexer device includes channel switching means and a channel discrimination signal output circuit, and the signal utilisation means include a channel discrimination recognition circuit fed from the signal output circuit, a signal take-in element fed from the switching means, a signal storage circuit supplied with signals from the element, a memory in which regulation and specification values appropriate to said graphic terminals are stored, and a central processing unit providing correct regulation by controlling the element in accordance with information stored in the memory, whereby the need for regulation in the multiplexer device is avoided.

In one way of carrying out the invention as applied to a system in which the picture signal outputs from a plurality of graphic terminals, for example, are delivered as hard copies, there are provided a channel discrimination signal output circuit in the multiplexer device; a channel discrimination signal recognition circuit; and video signal take-in means controllable as to regulation value and specification value by a central processing unit (CPU) and (in the hard copy system) a non-volatile Random Access Memory (RAM) capable of storing and rewriting the regulation values and specification values of the plurality of channels leading from the graphic terminals.

The specification of the video signals of each graphic terminal, and the regulation values enabling the optimum taking-in of video signals to be achieved are, when the apparatus is set up for use, stored as parameters in the non-voltatile RAM of the hard copy system.

When some channel is selected in the multiplexer device,video signals from the graphic terminal thus selected are fed in to the hard copy system, and simultaneously a channel discrimination signal is delivered from the multiplexer device. By using the said channel discrimination signal, the hard copy system reads the aforesaid previously set parameters out of the region of said channel in the non-volatile RAM, and delivers the same to the video signal take-in element. In this way, take-in of the video signals is automatically adjusted for optimum results. The operation of taking in the video signals is then started, and correct picture information is stored in the picture storage circuit of the hard copy system.

The invention is illustrated in and further explained in connection with the accompanying drawings in which

Figure 1 is a block diagram showing one embodiment of the invention;

Figure 2 is a time chart illustrative of the channel discrimination signals used in the system of Figure 1;

Figure 3 is a diagram of a preferred form of channel discrimination signal recognition circuit; and

Figure 4 is a time chart which is provided to assist in an understanding of the operations of the circuit of Figure 3.

Referring to Figure 1, GR1, GR2, GR3 and GR4 are four graphic terminals which are connected to a hard copy system generally designated 17 through the intermediary of a multiplexer device generally designated 13. Each graphic terminal feeds video signals to that multiplexer device through its output lead. The four output leads are referenced 12 in Figure 1.

The multiplexer device 13 comprises a video signal switching means 14 and a channel discrimination signal output element 15. The video signal switching means 14 may be of quite simple construction; for example it may be composed of relays, and has four channels corresponding respectively to the four terminals GR1 to GR4. When a channel is selected, the appropriate relay switches in that channel i.e. closes it, and video signals are delivered unchanged to the hard copy system.

The hard copy system 17 comprises a video signal take-in element 18, a channel discrimination signal recognition circuit 20, non-volatile RAM 22 capable of storing specifications and regulation values of video signals on the four channels, a picture storage circuit (GM) 19 and a CPU 21. Each of the component parts 18, 19, 20 and 22 can be controlled through the CPU 21.

The hard copy system 17 determines by means of the channel discrimination signal recognition circuit 20 the channel along which an input video signal comes. The parameters of this channel are then read out of the memory 22 and fed out to the video signal take-in element 18. An operation of take-in of video signals is then started, and these signals are transmitted to the picture storage circuit 19 which stores as a picture video signals converted into digital signals under the control of the CPU 21.

Figure 2 is a time chart of the channel discrimination signals prepared by the channel discrimination signal output circuit 15. In the present embodiment these channel discrimination signals from circuit 15 are negative-going logic pulses corresponding to terminals GR1 to GR4.

For example, when GR3 is selected, three successive negative logic pulses are generated as shown at 23 in Figure 2. The circuit 15 may take any of a variety of forms well known per se -e.g. it may comprise bit switches with counters -and needs no detailed description here.

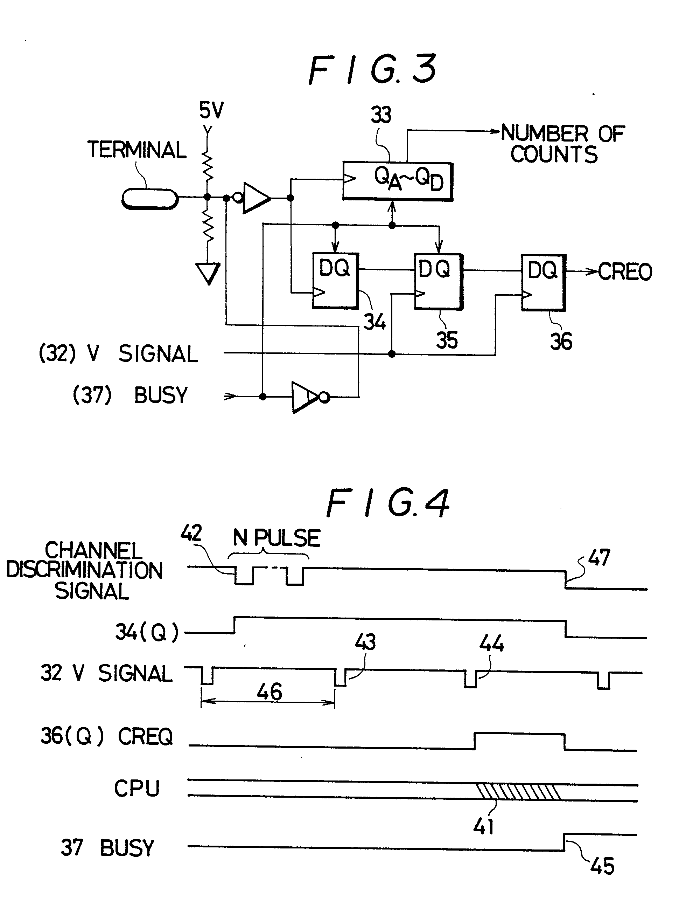

Figure 3 is a circuit diagram showing a suitable form which may be adopted for the channel discrimination signal recognition circuit 20 of Figure 1. Referring to Figure 3, a flip-flop circuit 34 detects the trailing edge of the channel discrimination signal,and 35 and 36 are further flip-flop circuits each of which latches the Q output of flip-flop 34 by a vertical sycnhronizing signal 32, herein termed the V signal. 33 is a counter which counts the number of pulses. A signal 37, herein termed the BUSY signal, is fed in as a "clear" signal to the counter, and the outputs (QA to QD) of the counter are connected to an input port CPU.

Figure 4 is a timing chart showing the sequence of recognition of channels. When the channel discrimination signal turns active (LOW) as at 42, the Q output signal from 34 becomes HIGH. Next, at the leading edge of the vertical synchronizing signal the V signal, the Q output from 35 becomes HIGH and, at the leading edge of a subsequent V signal at 44, the Q output from 36 becomes HIGH. This signal is fed to an input port of CPU which accordingly recognizes thereby that an external demand for copy has occurred. Next CPU reads out the values of the outputs QA to QD of counter 33 during a time period indicated by the shaded portion 41 of the line referenced CPU in Figure 4 and thus identifies which of the channels has been switched in by the multiplexer 13 of Figure 1. The outputs QA to QD of counter 33 show values which are counted up by the channel discrimination signal. The count values can be read exactly by a process of latching twice at the leading edge of the aforesaid V signal, provided, of course that the pulses for discriminating the channel come to an end within the time (46 in Figure 4) of one period of the V signal.

After completion of the foregoing operations, CPU reads out parameters from the region of a selected channel in the RAM 22 (Figure 1) and delivers the same to the video signal take-in element 18 (Figure 1). It also makes the BUSY signal 37 become HIGH as at 45 for the counter 33 and the flip-flops 34, 35 and 36. Accordingly the channel discrimination signal becomes LOW as at 47 thus in effect informing the multiplexer device 13 that the hard copy system is in the course of taking in video signals and printing. For the channel discrimination signals, a conventional signal line for copy start and BUSY signals is used unchanged, and this line fulfills copy start and BUSY functions as well in the present system.

As will now be seen the multiplexer device 13 does not need to have any regulation circuits and thus may be of simple construction even although there are a number of graphic terminals from which signals have to be taken. Because of this the cost of the apparatus can be made very substantially less than that of comparable known equipment. The invention is not limited to its use in connection with video signals of the same specification, but may be used to enable the connection of graphic terminals of different kinds to the same hard copy system.

Moreover, the invention is applicable not only to hard copy systems, but is generally applicable to systems of the kind in which video signals are stored graphically.

## Claims

1. A signal storage system in which a plurality of selectable graphic terminals (GR1...GR4) are connectable through a multiplexer device (13) to signal utilisation means (17) characterised in that the multiplexer device (13) includes channel switching means (14) and a channel discrimination signal output circuit (15), and the signal utilisation means (17) include a channel discrimination recognition circuit (20), fed from the signal output circuit (15), a signal take-in element (18) fed from the switching means (14), a signal storage circuit (19) supplied with signals from the element (18), a memory (22) in which regulation and specification values appropriate to said graphic terminals (GR1 to GR4) are stored, and a central processing unit - (CPU) providing correct regulation by controlling the element (18) in accordance with information stored in the memory (22), whereby the need for regulation in the multiplexer device (13) is avoided.

2. A system as claimed in claim 1 further characterised in that the graphic terminals (GR1 to GR4) have component colour video signals (RGB); the memory (22) is a random access memory - (RAM); and the switching means (14) is comprised of relays.

3. A hard copy system in which hard copies are obtained from a plurality of graphic terminals having RGB video signals, characterised in that said system comprises

a) a multiplexer device (13) which is provided with video signal inputs over a plurality of channels (12) and includes a channel discrimination signal output circuit (15)

b) a channel recognition circuit (20) which identifies a channel in accordance with said channel discrimination signal,

c) a memory (22) in which regulation values employed in the taking-in of video signals are secured for the plurality of channels,

d) a controlling means (21) which reads the regulation value of a selected channel out of said memory means (22) and controls a video signal take-in element (18), and

(e) a picture storing circuit (19) which stores as a picture video signals converted into digital signals under the control of said controlling means (21), picture printing being effected by the signals in said circuit (19).

# F I G. 1

GRAPHIC TERMINAL

13 MULTIPLEXER DEVICE

14 SWITCHING MEANS

17 HARD COPY SYSTEM

18 VIDEO SIGNAL TAKE IN ELEMENT

12

GR 1

12

GR 2

12

GR 3

12

GR 4

19

GM

CPU

16

15 CHANNEL OUTPUT CIRCUIT

20 CHANNEL RECOGNITION CIRCUIT

21   22

# F I G. 2

SELECTION OF CHANNEL 1 ( GR 1 )

SELECTION OF CHANNEL 2 ( GR 2 )

SELECTION OF CHANNEL 3 ( GR 3 )

23

SELECTION OF CHANNEL 4 ( GR 4 )

## F I G. 3

TERMINAL

5V

33

QA~QD → NUMBER OF COUNTS

DQ 34    DQ 35    DQ 36 → CREO

(32) V SIGNAL

(37) BUSY

## F I G. 4

CHANNEL DISCRIMINATION SIGNAL — 42 — N PULSE — 47

34(Q)

32 V SIGNAL — 43 — 44 — 46

36(Q) CREQ

CPU — 41

37 BUSY — 45